Europäisches Patentamt

European Patent Office

Office européen des brevets

(19)

(11) Veröffentlichungsnummer: **0 198 112**
**B1**

(12) **EUROPÄISCHE PATENTSCHRIFT**

(45) Veröffentlichungstag der Patentschrift:
16.08.89

(51) Int. Cl.⁴: **E 21 B 4/00**, F 16 C 17/06

(21) Anmeldenummer: **85112642.5**

(22) Anmeldetag: **05.10.85**

(54) **Axiallager für Meisseldirektantriebe von Tiefbohrwerkzeugen.**

(30) Priorität: **12.04.85 DE 3513124**

(43) Veröffentlichungstag der Anmeldung:
**22.10.86 Patentblatt 86/43**

(45) Bekanntmachung des Hinweises auf die Patenterteilung:
**16.08.89 Patentblatt 89/33**

(84) Benannte Vertragsstaaten:
**BE FR GB**

(56) Entgegenhaltungen:
**GB-A- 1 392 245**
**US-A- 2 424 028**
**US-A- 2 577 798**
**US-A- 2 983 481**

(73) Patentinhaber: **Eastman Christensen Company,**
**1937 South 300 West, Salt Lake City Utah 84115 (US)**

(72) Erfinder: **Krüger, Volker, Dr. Ing., Fritzenwiese 40,**
**D-3100 Celle (DE)**
Erfinder. **Daenicke, Heinrich, Dipl.-Ing., Knokenriehe 16,**
**D-3101 Wienhausen (DE)**

(74) Vertreter: **Busse & Busse Patentanwälte,**
**Postfach 1226 Grosshandelsring 6, D-4500 Osnabrück**
**(DE)**

ACTORUM AG

## Beschreibung

Die Erfindung bezieht sich auf einen Meißeldirektantrieb für Tiefbohrwerkzeuge nach dem Oberbegriff des Patentanspruchs 1.

Bei einem bekannten Meißeldirektantrieb der genannten Art (US-A-2 983 481) sind die Lagersegmente an ihrer in Drehrichtung vorderen Kante mit einer Abrundung versehen, um den Aufbau eines Schmierfilms zwischen den zueinander parallel ausgerichteten Lagerflächen zu begünstigen. Eine solche Kantenabrundung schafft zwar einen trichterähnlichen Einlaufbereich, jedoch reichen die sich in einem derartigen Einlaufbereich ausbildenden Druckverhältnisse in dem mitgeschleppten Schmiermittel nicht hin, um eine zuverlässige Schmierfilmbildung zu gewährleisten und verschleißfördernde Kontakte zwischen den Lagerflächen in wünschenswertem Ausmaß zu vermeiden.

Zur Verbesserung des Schmiermitteltransports zwischen die Lagerflächen von Axiallagern ist es bekannt, diese als Kippsegmentlager (US-A-2 424 028) mit einer Kippachse auszubilden, die durch einen senkrecht zur Lagerebene und dabei radial ausgerichteten Biegesteg definiert wird. Dieser Biegesteg kann mittig oder etwas außermittig zur Trägerplatte eines jeden Lagersegments angeordnet sein, befindet sich jedoch stets unterhalb der Lagerfläche des Lagersegments mit der Folge, daß eine abwärts gerichtete Bewegung der bezogen auf die Drehrichtung vorderen Kante des Lagersegments mit einer aufwärts gerichteten Bewegung der rückwärtigen Kanten der Lagersegmente einhergeht. Die jeweils auftretenden Axialkräfte im Lager wirken daher der Bildung konvergierender Schmierspalte entgegen.

Der Erfindung liegt die Aufgabe zugrunde, einen Meißeldirektantrieb mit einer Axiallagerung zu schaffen, welche die Bildung in Drehrichtung konvergierender Schmierspalte zwischen den Lagerflächen der Lagersegmente und der Lagerringe begünstigt.

Die Erfindung löst diese Aufgabe mit den Merkmalen des Patentanspruchs 1. Hinsichtlich wesentlicher weiterer Ausgestaltungen wird auf die Patentansprüche 2 bis 6 verwiesen.

Die erfindungsgemäße Ausbildung mit im wesentlichen parallel zur Lagerebene verlaufender Ausrichtung der Biegebalken und die Anordnung der Lagersegmente an deren freien Ende sichert eine gleichgerichtete Verschwenkung der gesamten Lagerfläche eines jeden Lagersegments und damit eine konvergierende Schmierspaltbildung in Abhängigkeit von Betriebsparametern und der konstruktiven Auslegung des Axiallagers, jedoch weitgehend unabhängig von den aufzunehmenden Axialkräften und aus solchen resultierenden Rückstellmomenten. Auf diese Weise ist es möglich, bereits in einem für Tiefbohrwerkzeuge mittleren Drehzahlbereich einen Schmierfilmaufbau zu sichern, der zumindest eine teilweise Trennung der Lagerflächen durch das Schmiermittel und als Folge davon eine Verschleißminderung bewirkt. Im höheren Drehzahlbereich bauen sich im konvergierenden Schmierspalt Druckverhältnisse auf, die ein vollständiges Aufschwimmen der Lagerflächen der Lagersegmente herbeiführen und jede direkte Berührung zwischen Lagerflächen ausschließen. Ein dabei auftretender ständiger Austausch von Schmiermittel im Schmierspalt begünstigt zugleich die Lagerkühlung.

Ein Ausführungsbeispiel der Erfindung ist in der Zeichnung dargestellt und wird im folgenden näher beschrieben. Es zeigen:

Fig. 1 als Prinzipdarstellung einen Längsschnitt durch einen Meißeldirektantrieb nach der Erfindung,

Fig. 2 einen Querschnitt in der Ebene A–B durch ein Axiallager des Meißeldirektantriebs nach Fig. 1,

Fig. 3 einen Längsschnitt entlang der Mantelfläche C–D durch das Axiallager in unbelastetem Zustand,

Fig. 4 einen Längsschnitt entlang der Mantelfläche C–D durch das Axiallager im Drehbetrieb und unter Axiallast,

Fig. 5 einen Längsschnitt ähnlich Fig. 4 jedoch einer abgewandelten Ausführung,

Fig. 6 einen halbseitigen Längsschnitt durch das Axiallager des Meißeldirektantriebs in einer entlang der Lagerachse verlaufenden Ebene, und

Fig. 7 einen halbseitigen Längsschnitt durch ein Axiallager einer abgewandelten Ausführung in einer entlang der Lagerachse verlaufenden Ebene.

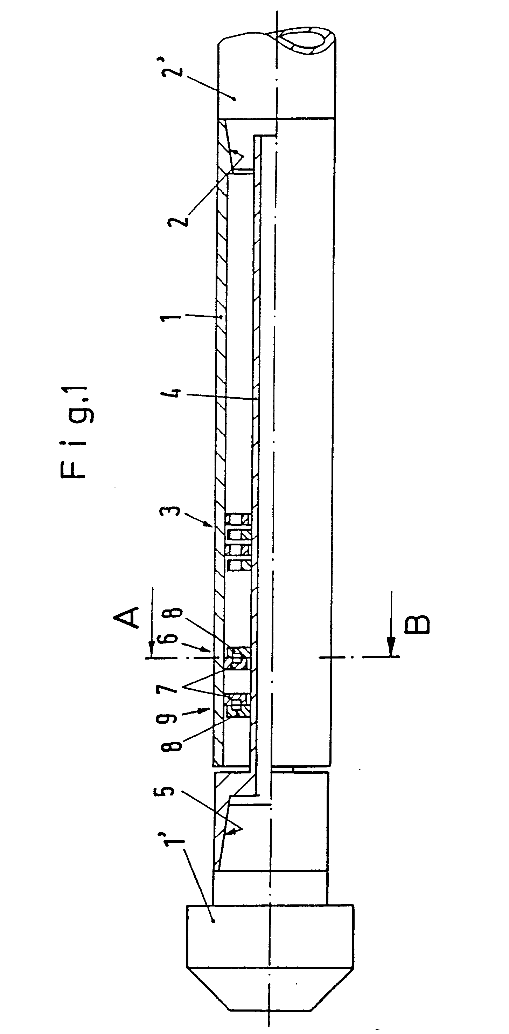

Der in Fig. 1 dargestellte Meißeldirektantrieb umfaßt ein rohrförmiges Gehäuse 1, das über ein Gewinde 2 mit einem Bohrstrang 2' verbindbar ist. Im Inneren des Gehäuses 1 ist eine von durchströmender Spülungsflüssigkeit antreibbare Rotationsmaschine in Gestalt einer Turbine 3 angeordnet, deren Welle 4 unten axial aus dem Gehäuse 1 austritt und ein Gewinde 5 für die Verbindung mit einem Drehbohrmeißel 1' aufweist. Zur Aufnahme der auf die Welle 4 einwirkenden zur Bohrlochsohle hin gerichteten Axialkräfte dient ein Axiallager 6 mit zwei Tragringen 7 und 8, von denen der eine 7 im Gehäuse 1 und der andere 8 auf der Welle 4 abgestützt ist. Um auch Kräfte in entgegengesetzter Richtung aufnehmen zu können, ist noch ein weiteres Axiallager 9 mit spiegelbildlicher Anordnung der Tragringe 7,8 vorgesehen.

Aus dem in Fig. 2 dargestellten Schnitt durch das Axiallager 6 ist der Aufbau des im Gehäuse 1 abgestützten Tragringes 7 erkennbar. Dieser weist über seinen Umfang verteilt axial verlaufende Durchbrüche 10 mit annähernd u-förmigem oder trapezförmigem Querschnitt auf. Bei u-förmigem Querschnitt wird integral aus dem Tragring 7 ein Biegebalken 11 gebildet. Bei trapezförmigem Querschnitt wird ein gesonderter Biegebalken 11' mit dem zwischen zwei benachbarten Durchbrüchen 10 verbliebenen Steg 12 derart verbunden, daß sein freies Ende 13 in den Durchbruch 10 hinein ragt. Jeder Biegebalken 11; 11' trägt ein in Draufsicht dem annähernd trapezförmigen Querschnitt der Durchbrüche 10 ähnliches aber verkleinertes Lagersegment 14 aus einem harten, verschleißfesten Material, z. B. aus einem gesinterten Metallpulver-Keramikwerkstoff oder polykristallinem Diamant. Das Lagersegment 14 ist mit seinem Biegebalken 11; 11' um eine bezogen auf seine räumlichen Abmessungen in Umfangsrichtung außermittige, im Bereich des Überganges des Biegebalkens 11; 11' in dem Steg 12 liegende, in Radialrichtung verlaufende Schwenkachse 15 schwenkbeweglich gelagert.

Wie aus dem in Fig. 3 dargestellten Längsschnitt durch den Tragring 7 entlang der Mantelfläche CD ersichtlich ist, sind die Lagersegmente 14 im unbelasteten Zustand bei stehender Welle 4 parallel zur Ebene des Tragringes 7 ausgerichtet. Mit ihrer Lagerfläche 16 liegen die Lagersegmente 14 dabei flächig an der Lagerfläche 17 eines Lagerringes 18 an, der auf dem Tragring 8 angeordnet ist. Der Lagerring 18 besteht vorzugsweise aus ähnlichem Material wie die Lagersegmente 14.

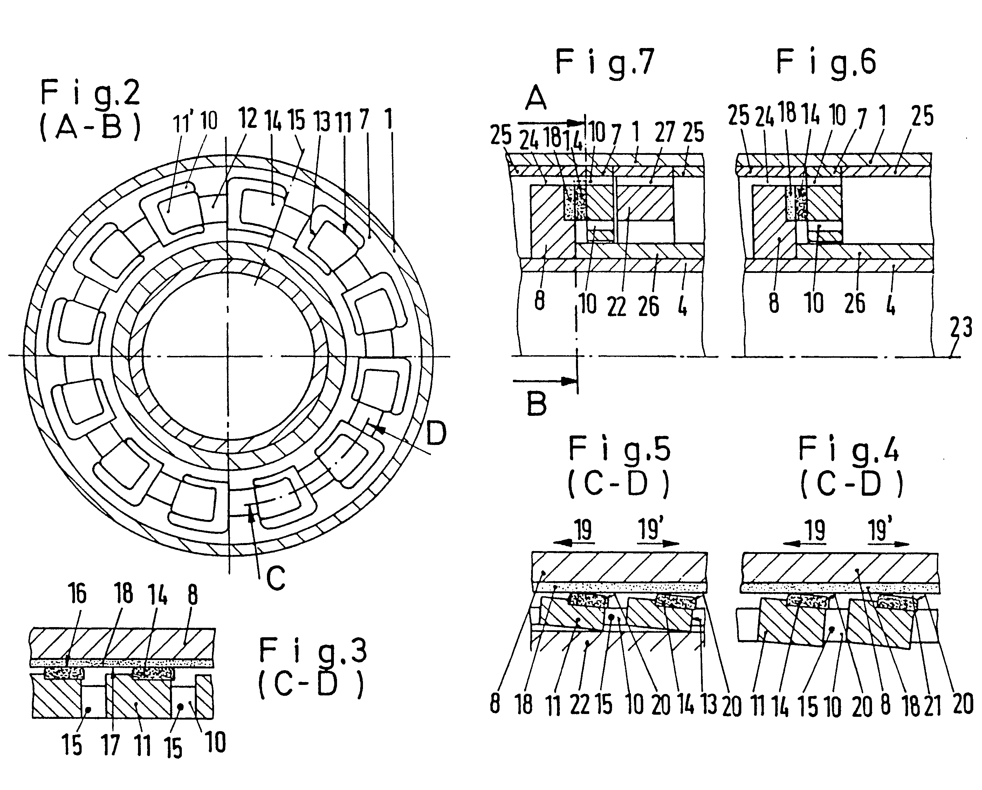

Wird nun die Welle 4 des Meißeldirektantriebs und damit auch der auf der Welle 4 abgestützte Tragring 8 mit seinem Lagerring 18 in Drehung in Richtung des Pfeiles 19 versetzt, wie es in Fig. 4 dargestellt ist, so schleppt der Lagerring 18 durch Adhäsion an seiner Lagerfläche 17 haftende Spülungsflüssigkeit mit, die sich, begünstigt durch Anfasungen 20 an den Lagersegmenten 14 und die Axialkraft des Lagerringes 18 auf die Lagersegmente 14 und damit die unter Schwenken um die Achse 15 nachgebenden Biegebalken 11; 11', zwischen die Lagerflächen 16 der Lagersegmente 14 und 17 des Lagerringes 18 schiebt. In den sich nunmehr bildenden Spalten 21, die in Drehrichtung 19 des Lagerringes 18 relativ zu den Lagersegmenten 14 konvergieren, steigt der Druck der Spülungsflüssigkeit zunächst stetig an, so daß sich ein die Lagerflächen 16, 17 entlastender oder gar trennender Schmierfilm aufbauen kann. Zum Ende des Spalts 21 hin, baut sich der Druck durch die rückwärtige austretende Spülungsflüssigkeit wieder auf den Umgebungsdruck ab. Im stationären Zustand wirkt die resultierende Kraft auf die Lagersegmente 14, die durch den Staudruck der mitgeschleppten Spülungsflüssigkeit und den Druck im Inneren des Spaltes 21 gebildet ist, im Sinne einer Stabilisierung ihrer Schwenklage um die Schwenkachse 15.

Während die Biegebalken 11 in Fig. 4 relativ stabil ausgebildet sind, um auch hohe Axialkräfte ohne Beschädigung überstehen zu können, kommt die in Fig. 5 dargestellte abgewandelte Ausführung mit weniger stabil ausgebildeten Biegebalken 11 aus. Dafür ist zur Begrenzung ihrer Durchbiegung im Abstand des zulässigen Auslenkweges ein Anschlagring 22 angeordnet. In der gezeigten Stellung liegen die Kanten der freien Enden 13 der Biegebalken 11 an diesem Anschlagring 22 an.

In den Fig. 6 und 7 sind die Ausführungen, wie sie in Fig. 4 und 5 gezeigt sind, im halbseitigen Längsschnitt in einer entlang der Achse 23 des Lagers verlaufenden Ebene dargestellt. Der Tragring 7 ist hierbei in Fig. 6 zwischen Montagehülsen 25 eingespannt, die ihrerseits zwischen nicht dargestellten Schultern des Gehäuses 1 verspannt sind. In Fig. 7 ist zusätzlich noch der Anschlagring 22 an den Tragring 7 angefügt und zusammen mit diesem zwischen den Montagehülsen 25 eingespannt. Der Tragring 8 mit dem Lagerring 18 ist zwischen einer Schulter der Welle 4 und einer Montagehülse 26 eingespannt.

Um der Spülungsflüssigkeit einen Axialdurchtritt durch das Axiallager zu ermöglichen, ist zwischen dem Tragring 8 und den Montagehülsen 25 ein Ringraum 24 belassen. Den Tragring 7 kann die Spülungsflüssigkeit durch die bereits erwähnten Durchbrüche 10 durchströmen, wobei als Fortsätze des Strömungsweges in dem Anschlagring 22 entsprechende Öffnungen 27 angeordnet sind, die vorzugsweise mit den Durchbrüchen 10 fluchten.

## Patentansprüche

1. Meißeldirektantrieb für Tiefbohrwerkzeuge mit Mitteln (2, 5) zur Verbindung mit einem Bohrstrang (2') an seinem einen Ende und einem Drehbohrmeißel (1') an seinem anderen Ende, bestehend aus einem rohrförmigen Gehäuse (1), einer darin angeordneten, von durchströmender Spülungsflüssigkeit antreibbaren Rotationsmaschine (3) und einer mit dieser verbundenen, im Gehäuse (1) axial und radial gelagerten und aus diesem austretenden Welle (4), bei dem das Axiallager (6; 9) der Spülungsflüssigkeit ausgesetzt ist und wenigstens ein Paar Tragringe (7; 8) umfaßt, von denen einer (7) am Gehäuse (1) abgestützt und mit mehreren, über seinen Umfang verteilten Lagersegmenten (14) versehen ist, und von denen sich der andere (8) auf der Welle (4) abstützt und einen ebenen, durchgehenden, mit den Lagersegmenten (14) des Tragringes (7) in Lagerkontakt stehenden Lagerring (18) aufweist, wobei die von den umlaufenden Teilen des Axiallagers (6; 9) mitgeschleppte Spülungsflüssigkeit zwischen den Lagerflächen (16; 17) einen die Gleitreibung vermindernden, hydrodynamischen Schmierfilm aufbaut, dadurch gekennzeichnet, daß jedes Lagersegment (14) zur Bildung eines in Drehrichtung (19) des Lagerrings (18) konvergierenden Spaltes (21) zwischen den Lagerflächen (16) der Lagersegmente (14) und des Lagerringes (18) um eine in Radialrichtung verlaufende außermittige Achse (15) schwenkbeweglich auf seinem Tragring (7) angeordnet ist, und daß jedes Lagersegment (14) am freien Ende (13) eines Biegebalkens (11; 11') angeordnet ist, der sich entgegen der Drehrichtung (19) des Lagerringes (18) von seinem am Tragring (7) angreifenden Ende zum Lagersegment (14) hin erstreckt und von einem u-förmigen Durchbruch (10) im Tragring umgeben ist.

2. Meißeldirektantrieb nach Anspruch 1, dadurch gekennzeichnet, daß der Biegebalken (11; 11') durch den u-förmigen Durchbruch (10) aus dem Tragring (7) integral ausgeformt ist.

3. Meißeldirektantrieb nach Anspruch 1 oder 2, dadurch gekennzeichnet, daß die Lagersegmente (14) und der Lagerring (18) aus Keramikwerkstoff, gesintertem Metallpulver-Werkstoff, Wolfram-Karbid oder polykristallinem Diamant bestehen und direkt oder über einen Zwischenträger auf ihrem Tragring (7; 8) aufgebracht sind.

4. Meißeldirektantrieb nach einem oder mehreren der Ansprüche 1 bis 3, dadurch gekennzeichnet, daß den Biegebalken (11; 11') Mittel (22) zur Begrenzung ihrer Durchbiegung zugeordnet sind.

5. Meißeldirektantrieb nach Anspruch 4, dadurch gekennzeichnet, daß die Mittel zur Begrenzung der Durchbiegung der Biegebalken (11; 11') durch einen Anschlagring (22) gebildet sind, der auf der in Biegerichtung der Biegebalken (11; 11') liegenden Seite des Tragringes (7) in einem Abstand angeordnet ist, der dem zulässigen Auslenkweg entspricht.

6. Meißeldirektantrieb nach einem oder mehreren der Ansprüche 1 bis 5, dadurch gekennzeichnet, daß für jede Axiallastrichtung wenigstens ein gesondertes Axiallager (6; 9) vorgesehen ist.

## Claims

1. A direct bit drive for deep-well drilling tools having means (2, 5) for connection to a drilling string (2') at its one end and a rotary drill bit (1') at its other end, consisting of a tubular housing (1), of a rotary engine (3) which is disposed therein and can be driven by drilling fluid flowing through, and of a shaft (4) connected to the engine, supported on thrust and radial bearings in the housing (1) and emerging from the latter, wherein the thrust bearing (6; 9) is exposed to the drilling fluid and comprises at least one pair of supporting rings (7; 8), one (7) of which is supported on the housing (1) and provided with a plurality of bearing pads (14) distributed over its circumference, and the other (8) of which is supported on the shaft (4) and comprises a plane, continuous bearing ring (18) which is in bearing contact with the bearing pads (14) of the supporting ring (7), and the drilling fluid entrained by the rotating parts of the thrust bearing (6; 9) builds up a hydrodynamic lubricating film between the bearing surfaces (16; 17), which reduces the sliding friction, characterised in that in order to form a gap (21) between the bearing surfaces (16) of the bearing pads (14) and of the bearing ring (18), which gap converges in the direction of rotation (19) of the bearing ring (18), each bearing pad (14) is mounted on its supporting ring (7) for tilting movement about an eccentric axis (15) extending in the radial direction, and in that each bearing pad (14) is disposed at the free end (13) of a bending beam (11; 11') which extends, counter to the direction of rotation (19) of the bearing ring (18), from its end engaging on the supporting ring (7) towards the bearing pad (14) and is surrounded by a U-shaped opening (10) in the supporting ring.

2. A direct bit drive according to claim 1, characterised in that the bending beam (11; 11') is formed integral from the supporting ring (7) by the U-shaped opening (10).

3. A direct bit drive according to claim 1 or 2, characterised in that the bearing pads (14) and the bearing ring (18) consist of ceramic material, sintered metal-powder material, tungsten carbide or polycrystalline diamond, and are mounted on their supporting ring (7, 8) directly or through an intermediate support.

4. A direct bit drive according to any one or more of claims 1 to 3, characterised in that associated with the bending beams (11; 11') are means (22) to limit their deflection.

5. A direct bit drive according to claim 4, characterised in that the means for limiting the bending of the bending beams (11; 11') are formed by a stop ring (22) which is disposed at the side of the supporting ring (7) situated in the bending direction of the bending beams (11; 11') at a distance which corresponds to the permissible deflection distance.

6. A direct bit drive according to any one or more claims 1 to 5, characterised in that at least one separate thrust bearing (6; 9) is provided for each direction of thrust load.

## Revendications

1. Entraînement direct de trépan pour des outils de forage profond pourvu de moyens (2, 5) de raccordement à une garniture de forage (2'), à sa première extrémité, et d'un trépan de forage rotatif (1'), à son autre extrémité, constitué d'un fût tubulaire (1), d'une machine de rotation (3) logée dans ce fût et pouvant être entraînée par du liquide de rinçage qui la traverse, et d'un arbre (4) relié à cette machine, supporté à rotation axialement et radialement dans le fût (1) et sortant de ce dernier, dans lequel le palier de butée (6; 9) est exposé au liquide de rinçage et comprend au moins une paire de bagues de support (7; 8) dont l'une (7) est montée sur le fût (1) et est pourvu de plusieurs segments de palier (14) répartis sur sa périphérie, et dont l'autre (8) est montée sur l'arbre (4) et comporte une bague de palier lisse continue en contact d'appui avec les segments de palier (14) de la bague de support (7), de sorte que le liquide de rinçage entraîné par les pièces tournantes du palier de butée (6; 9) forme, entre les surfaces d'appui (16; 17), un film lubrifiant hydrodynamique qui diminue la friction de glissement, caractérisé en ce que chaque segment de palier (14), en vue de former un interstice (21) convergeant dans le sens de rotation (19) de la bague de palier (18) entre les surfaces d'appui (16) des segments de palier (14) et de la bague de palier (18), est monté oscillant sur sa bague de support (7) autour d'un axe (15) excentré dans le sens radial, et que chaque segment de palier (14) est monté à l'extrémité libre (13) d'un élément de flexion (11; 11') qui s'étend dans un sens opposé au sens de rotation (19) de la bague de palier (18) depuis son extrémité attaquant la bague de support (7) vers le segment de palier (14) et est entouré par une ouverture en u (10) dans la bague de support.

2. Entraînement direct de trépan suivant la revendication 1, caractérisé en ce que l'élément de flexion (11; 11') est venu d'une seule pièce avec l'ouverture en forme de u (10) de la bague de support (17).

3. Entraînement direct de trépan suivant la revendication 1 ou 2, caractérisé en ce que les segments de palier (14) et la bague de palier (18) sont faits d'un matériau céramique, d'un matériau comprenant une poudre métallique frittée, de carbure de tungstène ou de diamant polycristallin et sont appliqués sur leur bague de support (7; 8) directement ou à l'aide d'un support intermédiaire.

4. Entraînement direct de trépan suivant l'une quelconque des revendications 1 à 3, caractérisé en ce qu'aux éléments de flexion (11; 11') sont associés des moyens (22) destinés à limiter leur flexion.

5. Entraînement direct de trépan suivant la revendication 4, caractérisé en ce que les moyens pour limiter la flexion des éléments de flexion (11; 11') sont formés par une bague de butée (22) qui est montée sur le côté de la bague de support (7) situé dans le sens de flexion de l'élément de flexion (11; 11') à une distance correspondant à la déflexion permise.

6. Entraînement direct de trépan suivant l'une quelconque des revendications 1 à 5, caractérisé en ce qu'au moins un palier de butée (6; 9) séparé est prévu pour chaque sens de la charge axiale.

Fig.1

Fig.6

Fig.7

Fig.4
(C-D)

Fig.5
(C-D)

Fig.2
(A-B)

Fig.3
(C-D)